# FASCICULE DE BREVET EUROPEEN

(11) **EP 2 254 786 B1**
(45) Date de publication et mention de la délivrance du brevet: **04.07.2018**
(21) Numéro de dépôt: 09730260.8
(22) Date de dépôt: 20.03.2009
(51) Int. Cl.: B62D 65/16, B62D 25/12, B60J 5/10, B60Q 1/26

(54) **MODULE ARRIERE DE VEHICULE AUTOMOBILE, DESTINE A ÊTRE RAPPORTE SUR UNE STRUCTURE D'OUVRANT ARRIERE**
KRAFTFAHRZEUGHECKMODUL ZUM AUFBAU IN EINER HECKKLAPPE
MOTOR VEHICLE REAR MODULE INTENDED TO BE AFFIXED TO A REAR HATCH STRUCTURE

(30) Priorité: 20.03.2008 FR 0851822
(43) Date de publication de la demande: 01.12.2010
(73) Titulaire: Compagnie Plastic Omnium, 69007 Lyon (FR); Rajon, Alexis, 69004 Lyon (FR); Fayt, Arnold, 01640 Jujurieux (FR)
(72) Inventeur: RAJON, Alexis, F-69004 Lyon (FR); FAYT, Arnold, F-01640 Jujurieux (FR)
(74) Mandataire: Remy, Vincent Noel Paul
(86) Numéro de dépôt international: PCT/FR2009/050486
(87) Numéro de publication internationale: WO 2009/125111

(56) Documents cités:
- EP-A- 0 635 416
- EP-A- 1 803 594
- WO-A-2006/053547

## Description

La présente invention concerne le domaine des ouvrants arrière de véhicule automobile, plus particulièrement, mais non exclusivement, les ouvrants munis d'un bandeau de carrosserie s'étendant entre deux blocs optiques. On s'intéresse notamment au positionnement relatif du bandeau et des blocs optiques.

On connaît par exemple du document FR 2 819 476 un hayon arrière muni d'une peau externe de carrosserie s'étendant en-dessous de la vitre arrière. Cette peau externe peut comprendre notamment un bandeau fusible destiné à encaisser un choc sans déformer la structure du hayon.

On sait par ailleurs qu'un hayon peut porter des blocs optiques, en particulier des dispositifs dont le vitrage jouxte la peau externe de carrosserie portée par le hayon. Dans ce cas, lors de l'assemblage des différents éléments sur la structure du hayon, le positionnement relatif de la peau de carrosserie et des blocs optiques prend un certain temps et peut s'avérer relativement complexe, comme c'est le cas dans WO 2006/053547 A et EP 1 803 594 A.

La présente invention vise en particulier à améliorer les jeux et affleurement entre la peau de hayon et le bloc optique arrière.

A cet effet, l'invention a pour objet un module arrière de véhicule automobile, selon la revendication 1.

Ainsi, on propose de rapporter sur l'ouvrant arrière un module pré-équipé, dans lequel le bloc optique et la peau de carrosserie sont déjà positionnés l'un par rapport à l'autre, grâce à l'élément de conformation. En conséquence, l'assemblage des différents éléments sur l'ouvrant arrière est réduit à une étape d'assemblage du module arrière sur l'ouvrant. Toutefois, on notera que le module arrière proposé par l'invention n'est pas forcément monté de façon pré-équipée sur l'ouvrant arrière, on peut envisager d'assembler le module pièce à pièce directement sur la structure de l'ouvrant.

Par ailleurs, grâce à l'élément de conformation, on dispose d'un élément de positionnement plaquant la peau de carrosserie autour du vitrage du bloc optique, généralement capable de contraindre la peau, ce qui permet d'obtenir un jeu réduit et constant entre le vitrage et la peau de carrosserie.

On notera qu'une "peau externe de carrosserie" est de préférence un élément opaque de carrosserie, en matière plastique, relativement souple, ayant une fonction d'habillage extérieur, au moins partiel, de l'ouvrant. Il s'agit par exemple d'un bandeau s'étendant entre deux blocs optiques. On entend par "bloc optique" un dispositif optique muni d'un boîtier d'optique, fermé par un vitrage d'optique, et renfermant des éléments optiques tels qu'une lampe et un réflecteur. Lorsque le bloc optique n'est pas trop lourd, la peau est non seulement conformée autour du bloc optique, mais sert également de support de la totalité du poids du bloc optique. On notera par ailleurs qu'une "structure d'ouvrant arrière" est une partie structurelle de l'ouvrant, portant par exemple les charnières de l'ouvrant, généralement destinée à être recouverte par des éléments d'habillage, notamment la peau de carrosserie. Lorsque l'ouvrant est un hayon arrière, il porte une vitre arrière.

L'invention peut en outre comporter l'une ou plusieurs des caractéristiques suivantes.
- L'élément de conformation comprend deux parties fixées chacune à une portion de la peau, ces deux parties étant en outre fixées entre elles de façon à enserrer les deux portions de la peau autour du bloc optique. Ainsi, la première et la seconde parties sont chacune solidarisées à la peau, au voisinage du vitrage d'optique, et la fixation de ces parties entre elles permet de plaquer la peau de carrosserie autour du bloc optique. En effet, avant d'être fixées entre elles, les deux parties, donc les portions correspondantes de la peau, sont mobiles l'une par rapport à l'autre, si bien qu'il est possible, lorsque le bloc optique est disposé dans la peau de carrosserie, de rapprocher les parties l'une par rapport à l'autre pour qu'elles plaquent les portions de la peau autour du bloc optique, puis de les fixer entre elles pour figer cette position de serrage. De préférence, la première et la seconde parties sont disposées de part et d'autre du bloc optique, par exemple la première partie est fixée sur la peau en dessous du vitrage d'optique, et la seconde partie est disposée au-dessus du vitrage. Par ailleurs, selon un mode de réalisation, l'élément de conformation a une forme de cuvelage, délimitant ainsi un logement de forme complémentaire à celle du boîtier d'optique, capable d'enserrer uniformément la surface du boîtier d'optique. Par exemple chaque partie forme un demi-cuvelage.
- Le module comporte des moyens d'indexage relatif du bloc optique et de la peau, les deux parties de l'élément de conformation conservant, lorsqu'elles sont fixées entre elles, la position relative de la peau et du bloc optique imposée par ces moyens d'indexage. Ces moyens d'indexage peuvent être des butées, par exemple des pions, prévues respectivement sur la peau, le long de l'ouverture jouxtant le bloc optique, et sur le bloc optique, sur le vitrage ou au voisinage du vitrage. Les moyens d'indexage permettent ainsi, au cours du montage du module, d'effectuer une première étape de positionnement relatif du vitrage du bloc optique et du bord de l'ouverture de la peau, assurant un jeu satisfaisant entre le vitrage et la peau, suivie par la suite d'une étape de positionnement relatif du reste du bloc optique et de la peau, figeant la position du vitrage et de la peau, mise en oeuvre lors de la fixation entre elles des deux parties de l'élément de conformation.

- L'une au moins des parties de l'élément de conformation est venue de moulage avec la peau. Ainsi cette partie est un prolongement de la peau, par exemple en forme de demi-cuvelage, ce prolongement n'étant pas visible depuis l'extérieur du véhicule du fait qu'il est recouvert par le bloc optique. Dans ce cas, on évite de mettre en oeuvre une étape de fixation de la partie sur la peau. Néanmoins, le cas où les deux parties sont rapportées sur la peau est intéressant car il peut assurer une meilleure conformation de la peau.
- L'élément de conformation assure une fonction de renfort local de la peau. Il assure donc, outre sa fonction de positionnement de la peau et du bloc optique, une fonction de renfort de la peau au voisinage du bloc optique, notamment d'anti-cloquage de la peau de carrosserie. Ainsi l'élément forme une doublure, au moins locale, de la peau, ce qui permet éventuellement de réduire l'épaisseur générale de la peau.
- L'élément de conformation assure une fonction d'absorption de chocs, en particulier d'absorption de chocs de type assurance. Un exemple de ces types de chocs est connu sous le nom de Danner ou AZT, correspondant à un impact à environ 15 km/h contre un mur fixe. Un autre exemple de choc assurance correspond à un choc à environ 8 km/h contre un angle de mur ou contre un poteau. Ainsi, le module que l'on rapporte sur l'ouvrant peut être pré-équipé, non seulement de blocs optiques et de la peau de carrosserie, mais également de moyens d'absorption de chocs arrière. En outre, on utilise une même pièce, l'élément de conformation, pour assurer des fonctions traditionnellement distinctes, à savoir la fonction de positionnement des blocs optiques et de la peau de carrosserie, et la fonction d'absorption. On notera que la fonction d'absorption de chocs peut être assurée par l'élément de conformation grâce à des nervures d'absorption réalisées sur cet élément, éventuellement des nervures en nid d'abeille.
- L'élément de conformation a une forme générale extérieure épousant sensiblement la forme générale intérieure de la peau de carrosserie. En particulier, l'élément de conformation s'étend d'un bloc optique à un bloc optique opposé. Ainsi, l'élément de conformation forme une sorte de doublure interne de la peau de carrosserie, cette doublure s'étendant de préférence sur sensiblement toute la surface de la peau de carrosserie. L'élément peut donc assurer une fonction de renforcement ou d'anti-cloquage de la peau. On peut en outre, grâce à cette forme de l'élément de conformation, réaliser une peau de carrosserie d'épaisseur moins importante qu'une peau de carrosserie classique. Par ailleurs, cette forme étendue de l'élément de conformation permet d'intégrer la fonction d'absorption de chocs.
- Le module comprend deux blocs optiques, et la peau de carrosserie est un bandeau s'étendant entre les deux blocs optiques, ce bandeau étant de préférence fusible, configuré de manière à pouvoir encaisser un choc extérieur sans déformer la structure de l'ouvrant. Ainsi, en cas de choc, en particulier en cas de choc avec un autre véhicule qui se trouve derrière l'ouvrant arrière, et dans le cas d'une déformation plastique du bandeau, on peut ne remplacer que ce bandeau fusible déformé, sans avoir à réparer le reste de l'ouvrant. Cette fonctionnalité est particulièrement intéressante dans le cas où le bandeau est situé à la hauteur d'une poutre de chocs arrière du véhicule, ou encore dans le cas où le bandeau fusible est disposé juste au-dessus d'un bouclier arrière agencé au droit d'une poutre de chocs.
- Le module comprend des moyens d'étanchéité empêchant l'intrusion de liquide à l'intérieur de l'ouvrant, par exemple entre la structure de l'ouvrant et la peau de carrosserie. Par exemple, l'élément de conformation définit un logement étanche de réception du bloc optique. On comprend que l'étanchéité concerne aussi bien l'étanchéité aux liquides que l'étanchéité aux salissures.

L'invention a également pour objet un procédé d'assemblage d'un module tel que présenté ci-dessus, l'élément de conformation comprenant deux parties fixées chacune à une portion de la peau, comportant les étapes suivantes :
- déplacement des parties de l'élément de conformation de façon à enserrer les deux portions de la peau autour du bloc optique ;
- fixation des deux parties entre elles de façon à figer la position relative du bloc optique et de la peau.

Ainsi, les parties de l'élément de conformation étant solidarisées à la peau, elles ne font plus qu'un seul tenant avec les portions respectives de cette dernière, si bien que la fixation, par la suite, des parties par rapport au bloc optique, par exemple en fixant les parties sur le boîtier d'optique, a pour effet de positionner et fixer définitivement la peau de carrosserie par rapport au bloc optique.

Avantageusement, ce procédé comporte une étape, avant l'étape de déplacement, au cours de laquelle on fixe à la peau au moins l'une des parties de l'élément de conformation. Cette fixation est par exemple mise en oeuvre par collage, soudage encliquetage, agrafage, vissage ou encore bouterollage.

Selon un mode de réalisation, le procédé comporte une étape d'indexage relatif du bloc optique et de la peau, et l'étape de fixation des deux parties est mise en oeuvre de façon que ces deux parties conservent la position relative de la peau et du bloc optique imposée lors de l'étape d'indexage.

L'invention sera mieux comprise à la lecture de la description qui va suivre, donnée uniquement à titre d'exemple et faite en se référant aux dessins dans lesquels :
- la figure 1 est une vue en perspective éclatée d'un module arrière selon un premier mode de réalisation de l'invention, rapporté sur une structure de hayon ;
- la figure 2a est une vue en coupe du module de la figure 1, au cours de son assemblage ;
- la figure 2b est une vue similaire à la figure 2a, au cours d'une étape suivante du procédé d'assemblage ; et
- la figure 3 est une vue similaire à la figure 2b, pour un module selon un second mode de réalisation de l'invention.

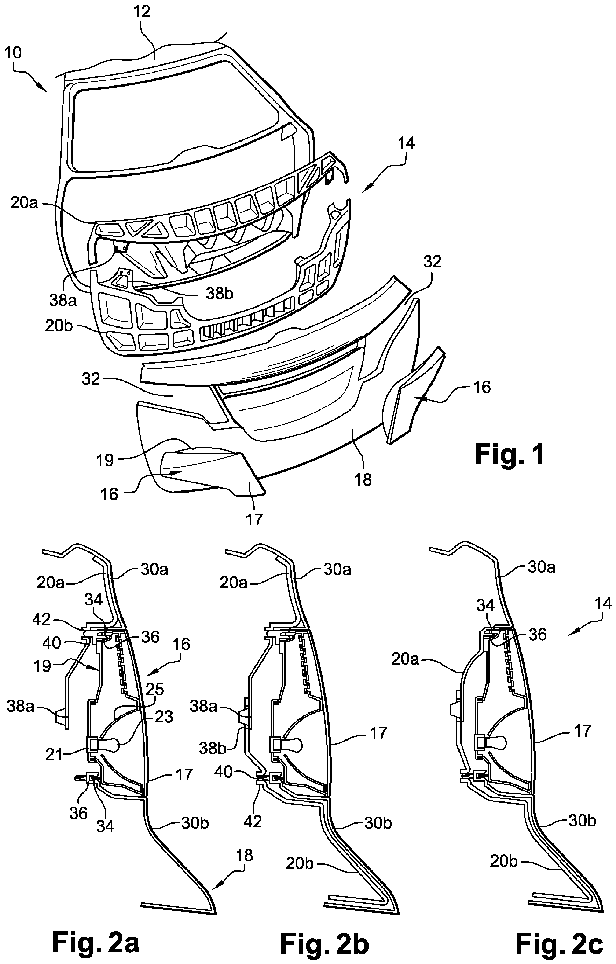

Comme on peut le voir sur la figure 1, un ouvrant arrière 10, par exemple un hayon, comprend, d'une part, une structure 12, d'autre part un module arrière 14 rapporté sur la structure 12. Le module 14 comprend deux blocs optiques 16, une peau externe de carrosserie 18, jouxtant au moins en partie les blocs optiques 16, et un élément 20a, 20b de conformation de la peau 18 autour des blocs optiques 16.

Chaque bloc optique 16 est muni d'un vitrage 17 et d'un boîtier 19. Comme on peut le voir sur la figure 2a, le boîtier 19 est fermé par le vitrage 17, de façon à former un logement étanche. Par ailleurs, on rapporte sur le boîtier 19 un couvercle 21, muni notamment d'une lampe 23 et d'un réflecteur 25.

Dans cet exemple, le module 14 est destiné à être monté pré-équipé sur la structure de hayon 12, les blocs optiques 16 étant déjà positionnés par rapport à la peau de carrosserie 18.

Par ailleurs, dans l'exemple décrit, l'élément de conformation 20a, 20b assure une fonction d'absorption de chocs, en particulier d'absorption de chocs de type assurance. A cet effet, l'élément 20a, 20b est muni de nervures d'absorption de chocs assurance.

Toujours dans cet exemple, la peau de carrosserie 18 est un bandeau s'étendant entre les blocs optiques 16. Selon un mode de réalisation avantageux, ce bandeau 18 est fusible, configuré de manière à pouvoir encaisser un choc extérieur sans déformer la structure 12 de l'ouvrant 10. Le bandeau 18 est de préférence situé au-dessus d'un bouclier de pare-chocs arrière, non représenté, ce bouclier recouvrant une poutre de chocs arrière.

L'élément de conformation 20a, 20b comprend deux parties, à savoir une partie supérieure 20a et une partie inférieure 20b. Comme on peut le voir sur la figure 1, l'élément 20a, 20b a une forme générale extérieure épousant sensiblement la forme générale intérieure de la peau de carrosserie 18, ce qui permet de remplir un rôle de renfort de la peau 18. Le renforcement de cette peau est intéressant d'une part pour l'empêcher de vriller, d'autant plus lorsque la peau 18 s'étend sur une grande surface et lorsque son épaisseur est réduite, et permet également de jouer un rôle d'anti-cloquage de la peau. On comprendra que "épouser sensiblement la forme générale intérieure de la peau" peut se faire par des appuis discrets de l'élément de conformation sur la peau répartis sur au moins une partie de la surface de la peau 18.

Dans cet exemple, l'élément de conformation 20a, 20b assure une fonction de renfort de la peau 18 sur sensiblement toute sa surface, mais l'on peut envisager que l'élément de conformation assure une fonction de renfort local de la peau. Par exemple, l'élément de conformation est divisé et ne s'étend pas d'un bloc optique 16 à l'autre, mais seulement au voisinage de chacun des blocs optiques 16, en renforçant la peau localement autour des blocs optiques, pour plaquer la peau 18 autour des blocs optiques.

Les parties 20a, 20b de l'élément de conformation sont destinées à être fixées chacune à une portion 30a, 30b de la peau 18. Ces portions 30a, 30b de la peau sont situées sur le bord de l'ouverture 32 de la peau 18 destinée à jouxter les vitrages d'optiques 17. Dans cet exemple, les portions 30a et 30b sont disposées respectivement au-dessus et au-dessous du vitrage d'optique 17.

Le module arrière 14 comporte des moyens 34, 36 d'indexage relatif du bloc optique et de la peau 18. Les moyens 34 sont, dans l'exemple, un pion d'indexage prévu sur le boîtier d'optique 19, au voisinage du vitrage 17. Les moyens 36 sont une fente d'indexage, prévue sur la peau 18, au voisinage direct du vitrage 17, de façon à coopérer avec les moyens 34 afin d'imposer un jeu satisfaisant entre le vitrage 17 et le bord de l'ouverture 32 de la peau 18.

Par ailleurs, les parties 20a, 20b de l'élément de conformation comportent des moyens 38a, 38b de fixation des parties 20a, 20b entre elles, cette fixation étant configurée de façon à permettre d'enserrer les portions 30a, 30b de la peau 18 autour des blocs optiques 16. Les moyens de fixation 38a, 38b sont agencés de façon à conserver, lorsque les parties 20a, 20b sont fixées entre elles, la position relative de la peau 18 et des blocs optiques 16 imposée par les moyens d'indexage 34, 36.

On notera que les moyens de fixation 38a, 38b peuvent assurer en outre une fixation des parties 20a, 20b avec le bloc optique 16.

On notera en outre que le module 14 comporte dans cet exemple des moyens 40, 42 d'indexage relatif de l'élément de conformation 20a, 20b et de la peau 18. Ces moyens comprennent plus précisément des pions 40 réalisés dans la portion 30a, 30b de la peau 18 et coopérant avec des orifices 42 réalisés dans l'élément 20a, 20b. Ces moyens 40, 42, permettent de positionner les parties 20a et 30a au plus près possible du vitrage d'optique 17.

On peut prévoir par ailleurs des moyens d'étanchéité permettant de rendre étanche le volume compris entre la structure 12 et la peau extérieure 18, par exemple à l'aide d'un ou plusieurs joints, disposés de préférence entre l'un et l'autre des éléments choisis parmi la structure 12, l'élément de conformation 20a, 20b, le bloc optique 16, la peau 18.

On notera que, sur la figure 1, l'élément de conformation 20a, 20b assure des fonctions de renforcement et d'absorption de façon facultative.

Un procédé d'assemblage du module 14 va à présent être décrit, en référence aux figures 2a, 2b.

Selon un exemple du procédé, on procède tout d'abord à une première étape de fixation de la partie 20a sur la portion 30a de la peau 18. Cette fixation peut se faire par soudage, collage, encliquetage, agrafage, vissage ou encore bouterollage.

On procède ensuite à une deuxième étape d'indexage relatif du bloc optique 16 et de la peau 18. Cette étape d'indexage consiste à faire coopérer les moyens d'indexage 34, 36 de façon que le vitrage d'optique 17 soit convenablement positionné par rapport aux bords des ouvertures 32 de la peau 18. Sur la figure 2a, on peut voir le module 14 à l'issue de cette seconde étape d'indexage. Puis on passe à une troisième étape de fixation de la partie 20b sur la portion 30b de la peau 18. Cette fixation peut également prendre la forme d'un collage, d'un soudage, d'un encliquetage, d'un agrafage, d'un vissage ou d'un bouterollage. A l'issue de cette troisième étape, on passe à une étape d'indexage des parties 20a, 20b et des portions 30a, 30b de la peau 18, par coopération des moyens 40, 42, puis à une quatrième étape de déplacement des parties 20a, 20b, de façon à enserrer les portions 30a, 30b de la peau 18 autour du bloc optique 16. Au cours de cette étape, les parties 20a, 20b sont rapprochées l'une par rapport à l'autre, de façon à plaquer la peau 18 autour du bloc optique 16, plus précisément à enserrer la peau autour du bloc optique, la peau 18 formant ainsi un étau autour du vitrage d'optique 17 grâce aux parties 20a, 20b. On passe ensuite à une cinquième étape de fixation des parties 20a, 20b entre elles, grâce aux moyens de fixation 38a, 38b, de façon à figer la position relative du bloc optique 16 et de la peau 18. Cette cinquième étape peut être associée, précédée ou suivie d'une étape de fixation du bloc optique et de l'élément de conformation 20a, 20b.

On peut voir sur la figure 2b le module 14 à l'issue de ces étapes. On notera que la cinquième étape de fixation des deux parties entre elles est mise en oeuvre de façon que les parties 20a, 20b conservent la position relative de la peau 18 et du bloc optique 16 imposée par les moyens d'indexage 34, 36 lors de la seconde étape d'indexage.

Comme on peut le voir sur la figure 3, dans un module 14 selon un autre mode de réalisation de l'invention, la partie 20a de l'élément de conformation n'est pas rapportée sur la peau 18, mais fait partie intégrante de la peau 18, la partie 20a étant venue de moulage avec la portion 30a, et prolongeant cette portion 30a à l'arrière du bloc optique 16.

Le procédé d'assemblage du module de la figure 3 est similaire à celui des figures 2a, 2b. Néanmoins, du fait que la partie 20a est venue de moulage avec la peau 18, on ne met pas en oeuvre la première étape de fixation de cette partie 20a sur la peau 18. Les étapes qui suivent sont similaires à celles du module des figures 2a, 2b.

On notera que l'invention n'est pas limitée aux modes de réalisation précédemment décrits. En particulier, dans le procédé d'assemblage, certaines des étapes peuvent suivre un ordre différent, ou encore peuvent être supprimées ou comporter des étapes supplémentaires. Par exemple, on peut intervertir la seconde et la troisième étape des figures 2a, 2b, c'est-à-dire que l'on peut mettre en oeuvre tout d'abord l'étape de fixation de la partie 20b sur la peau 18, puis l'étape d'indexage du bloc optique 16 par rapport à la peau 18.

Par ailleurs, les moyens d'indexage 36 du bloc optique peuvent être prévus, non pas sur la portion 30a, mais sur la partie 20a de l'élément de conformation, au voisinage du vitrage 17.

On notera que, grâce à l'étape d'indexage par les moyens 34, 36, on impose une contrainte sur la peau 18 pour adapter la taille de l'ouverture 32 à la taille réelle du bloc optique 16. De telles contraintes peuvent créer des risques de bâillement de la peau 18 autour du vitrage d'optique 17, c'est pourquoi la présence de l'élément de conformation 20a, 20b permet de figer la peau à la taille de l'ouverture 32.

Parmi les avantages de l'invention, on notera que l'on peut envisager de démonter le bloc optique 16, par exemple pour une réparation ou un changement de lampe, sans pour autant avoir à repositionner le bloc optique par rapport à la peau 18. En effet, on peut démonter le bloc optique 16 tout en maintenant les parties 20a, 20b fixées entre elles, si bien que l'on peut ensuite le remonter sans perdre la géométrie imposée par les parties 20a, 20b.

## Revendications

1. Module arrière (14) de véhicule automobile, destiné à être rapporté sur une structure (12) d'ouvrant arrière (10), ce module comportant :
- un bloc optique (16),
- une peau externe de carrosserie (18), cette peau jouxtant au moins en partie le bloc optique,
- un élément de conformation (20a, 20b), agencé de façon à conformer la peau (18) autour du bloc optique, **caractérisé en ce que**
l'élément de conformation comprend deux parties (20a, 20b) fixées chacune à une portion (30a, 30b) de la peau (18), ces deux parties étant en outre fixées entre elles de façon à enserrer les deux portions de la peau autour du bloc optique (16).

2. Module selon la revendication précédente, comportant des moyens (34, 36) d'indexage relatif du bloc optique (16) et de la peau (18), les deux parties (20a, 20b) de l'élément de conformation conservant, lorsqu'elles sont fixées entre elles, la position relative de la peau et du bloc optique imposée par ces moyens d'indexage.

3. Module selon l'une quelconque des revendications précédentes, lequel l'une au moins des parties (20a) de l'élément de conformation est venue de moulage avec la peau (18).

4. Module selon l'une quelconque des revendications précédentes, dans lequel l'élément de conformation (20a, 20b) assure une fonction de renfort local de la peau (18).

5. Module selon l'une quelconque des revendications précédentes, dans lequel l'élément de conformation (20a, 20b) assure une fonction d'absorption de chocs.

6. Module selon l'une quelconque des revendications précédentes, dans lequel l'élément de conformation (20a, 20b) a une forme générale extérieure épousant sensiblement la forme générale intérieure de la peau de carrosserie (18).

7. Module selon l'une quelconque des revendications précédentes, comprenant deux blocs optiques (16), et dans lequel la peau de carrosserie (18) est un bandeau s'étendant entre les deux blocs optiques, ce bandeau étant de préférence fusible, configuré de manière à pouvoir encaisser un choc extérieur sans déformer la structure de l'ouvrant.

8. Module selon l'une quelconque des revendications précédentes, dans lequel l'élément de conformation (20a, 20b) comprend des moyens d'étanchéité empêchant l'intrusion de liquide à l'intérieur de l'ouvrant, par exemple entre la structure de l'ouvrant (12) et la peau de carrosserie (18).

9. Procédé d'assemblage d'un module selon l'une quelconque des revendications précédentes, l'élément de conformation comprenant deux parties (20a, 20b) fixées chacune à une portion (30a, 30b) de la peau, comportant les étapes suivantes :
- déplacement des parties (20a, 20b) de l'élément de conformation de façon à enserrer les deux portions de la peau autour du bloc optique (16) ;
- fixation des deux parties (20a, 20b) entre elles de façon à figer la position relative du bloc optique et de la peau.

10. Procédé selon la revendication 9, comprenant une étape, avant l'étape de déplacement, au cours de laquelle on fixe à la peau (18) au moins l'une des parties (20a, 20b) de l'élément de conformation.

11. Procédé selon la revendication 9 ou 10, comprenant une étape d'indexage relatif du bloc optique et de la peau, et l'étape de fixation des deux parties (20a, 20b) est mise en oeuvre de façon que ces deux parties conservent la position relative de la peau et du bloc optique imposée lors de l'étape d'indexage.

## Patentansprüche

1. Heckmodul (14) für Kraftfahrzeug zum Aufsetzen auf einer Struktur (12) einer Heckklappe (10), wobei dieses Modul Folgendes aufweist:
- einen Scheinwerfereinsatz (16),
- eine Karosserieaußenhaut (18), wobei diese Haut zumindest teilweise den Scheinwerfereinsatz säumt,
- ein Form bildendes Element (20a, 20b), das so vorgesehen ist, dass es die Haut (18) um den Scheinwerfereinsatz herum bildet,
**dadurch gekennzeichnet, dass** das Form bildende Element zwei Teile (20a, 20b) umfasst, die jedes an einem Abschnitt (30a, 30b) der Haut (18) befestigt sind, wobei diese zwei Teile ferner aneinander in der Form befestigt sind, dass sie die zwei Abschnitte der Haut um den Scheinwerfereinsatz (16) herum spannen.

2. Modul nach dem vorhergehenden Anspruch, aufweisend Mittel (34, 36) zur relativen Indexierung des Scheinwerfereinsatzes (16) und der Haut (18), wobei die zwei Teile (20a, 20b) des Form bildenden Elements, wenn sie aneinander befestigt sind, die durch diese Indexierungsmittel vorgegebene relative Position der Haut und des Scheinwerfereinsatzes aufrecht erhalten.

3. Modul nach einem der vorhergehenden Ansprüche, wobei zumindest eines der Teile (20a) des Form bildenden Elements an die Haut (18) angeformt ist.

4. Modul nach einem der vorhergehenden Ansprüche, wobei das Form bildende Element (20a, 20b) die Funktion einer lokalen Verstärkung der Haut (18) sicherstellt.

5. Modul nach einem der vorhergehenden Ansprüche, wobei das Form bildende Element (20a, 20b) die Funktion einer Stoßdämpfung sicherstellt.

6. Modul nach einem der vorhergehenden Ansprüche, wobei das Form bildende Element (20a, 20b) eine allgemeine äußere Form hat, die sich im Wesentlichen an die allgemeine innere Form der Karosseriehaut (18) anpasst.

7. Modul nach einem der vorhergehenden Ansprüche, umfassend zwei Scheinwerfereinsätze (16) und wobei die Karosseriehaut (18) eine Blende ist, die sich zwischen den zwei Scheinwerfereinsätzen erstreckt, wobei diese Blende vorzugsweise schmelzbar ist und so ausgestaltet ist, dass sie einen äußeren Stoß dämpfen kann, ohne die Struktur der Klappe zu verformen.

8. Modul nach einem der vorhergehenden Ansprüche, wobei das Form bildende Element (20a, 20b) Abdichtungsmittel umfasst, die das Eindringen von Flüssigkeit in das Innere der Klappe verhindern, zum Beispiel zwischen der Struktur der Klappe (12) und der Karosseriehaut (18).

9. Verfahren zur Montage eines Moduls nach einem der vorhergehenden Ansprüche, wobei das Form bildende Element zwei Teile (20a, 20b) umfasst, die jedes an einem Abschnitt (30a, 30b) der Haut befestigt sind, das die folgenden Schritte aufweist:
- Bewegen der Teile (20a, 20b) des Form bildenden Elements in der Form, dass sie die zwei Abschnitte der Haut um den Scheinwerfereinsatz (16) herum spannen;
- Befestigen der zwei Teile (20a, 20b) aneinander in der Form, dass sie relative Position des Scheinwerfereinsatzes und der Haut festlegen.

10. Verfahren nach Anspruch 9, umfassend einen Schritt, vor dem Schritt des Bewegens, bei dem an der Haut (18) zumindest eines der Teile (20a, 20b) des Form bildenden Elements befestigt wird.

11. Verfahren nach Anspruch 9 oder 10, umfassend einen Schritt des relativen Indexierens des Scheinwerfereinsatzes und der Haut und wobei der Schritt des Befestigens der zwei Teile (20a, 20b) in der Form durchgeführt wird, dass diese zwei Teile die beim Schritt des Indexierens vorgegebene relative Position der Haut und des Scheinwerfereinsatzes aufrecht erhalten.

## Claims

1. Motor vehicle rear module (14) intended to be affixed to a structure (12) of a rear hatch (10), this module comprising:
- a light unit (16),
- an external bodywork skin (18), this skin being at least partly adjacent to the light unit,
- a shaping element (20a, 20b), designed in such a way as to shape the skin (18) around the light unit, **characterised in that** the shaping element comprises two parts (20a, 20b) each attached to a portion (30a, 30b) of the skin (18), these two parts being in addition attached to each other so as to clamp the two portions of the skin around the light unit (16).

2. Module according to the preceding claim, comprising means (34, 36) for relative indexing of the light unit (16) and of the skin (18), the two parts (20a, 20b) of the shaping element keeping, when they are attached to each other, the relative position of the skin and of the light unit imposed by these indexing means.

3. Module according to any one of the preceding claims, wherein at least one of the parts (20a) of the shaping element is moulded with the skin (18).

4. Module according to any one of the preceding claims, wherein the shaping element (20a, 20b) reinforces the skin (18) locally.

5. Module according to any one of the preceding claims, wherein the shaping element (20a, 20b) absorbs shocks.

6. Module according to any one of the preceding claims, wherein the shaping element (20a, 20b) has an outer general shape which substantially matches the inner general shape of the bodywork skin (18).

7. Module according to any one of the preceding claims, comprising two light units (16), and wherein the bodywork skin (18) is a strip extending between the two light units, this strip preferably being fusible, configured so as to be able to absorb an external shock without deforming the structure of the hatch.

8. Module according to any one of the preceding claims, wherein the shaping element (20a, 20b) comprises sealing means preventing the ingress of liquid inside the hatch, for example between the hatch structure (12) and the bodywork skin (18).

9. Method for assembling a module according to anyone of the preceding claims, the shaping element comprising two parts (20a, 20b) each attached to a portion (30a, 30b) of the skin, comprising the following steps:
- moving the parts (20a, 20b) of the shaping element so as to clamp the two portions of the skin around the light unit (16);
- attaching the two parts (20a, 20b) together so as to freeze the relative position of the light unit and of the skin.

10. Method according to claim 9, comprising a step, before the moving step, during which at least one of the parts (20a, 20b) of the shaping element is attached to the skin (18).

11. Method according to claim 9 or 10, comprising a step of relative indexing of the light unit and of the skin, and the step of attaching the two parts (20a, 20b) is implemented so that these two parts keep the relative position of the skin and of the light unit imposed during the indexing step.
